# EUROPÄISCHE PATENTSCHRIFT

(11) **EP 2 581 884 B1**
(45) Veröffentlichungstag und Bekanntmachung des Hinweises auf die Patenterteilung: **22.07.2020**
(21) Anmeldenummer: 12006845.7
(22) Anmeldetag: 02.10.2012
(51) Int. Cl.: B65G 69/04, G07F 7/06

(54) **Verteileinrichtung für Rücknahmeeinrichtungen von Getränkebehältnissen**
Distributor device for collection facilities for beverage containers
Dispositif de répartition pour des installations de recyclage de récipients de boissons

(30) Priorität: 14.10.2011 DE 102011115996
(43) Veröffentlichungstag der Anmeldung: 17.04.2013
(73) Patentinhaber: TRAUTWEIN SB-TECHNIK GmbH, 73760 Ostfildern (DE)
(72) Erfinder: Trautwein, Hans-Hermann, 73760 Ostfildern (DE); Eckert, Rainer, Dr.-Ing., 73230 Kirchheim (DE)
(74) Vertreter: Hennings, Martin

(56) Entgegenhaltungen:
- WO-A1-96/28607
- DE-A1-102009 018 108
- DE-C- 437 772
- DE-U- 7 023 934
- DE-U1-202011 003 999
- FR-A1- 2 725 922
- US-A- 5 758 699

## Beschreibung

Die vorliegende Erfindung betrifft eine Verteileinrichtung für Rücknahmeeinrichtungen von Getränkebehältnissen, im Wesentlichen aufweisend einen dem Auslass der Zuführeinrichtung zugeordneten fahrbaren Sammelbehälter, eine Antriebseinheit und eine übergeordnete Steuerung.

Die Rücknahme und das Sammeln von recyclingfähigen Wertstoffen, wie Getränkebehältnisse aus Metall, Kunststoff oder Kartonverpackungen, erfolgt zumeist mittels Rücknahmeeinrichtungen, welche mit oder ohne Kompaktierungseinheiten ausgebildet sind, der nachfolgenden Aufnahme der Behältnisse in den Rücknahmeeinrichtungen zugeordneten Sammelbehältern und dem abschließenden Transport zu entsprechenden Verwertungseinrichtungen,

Bekannt ist, dass aus der Aufnahme dieser Behältnisse in den Sammelbehältern unterhalb des Auslasses der Zuführung Schüttgutkegel resultieren, welche ursächlich sind für verfrühte signalisierte Vollmeldungen und notwendige Leerungen der Sammelbehälter, obwohl deren Aufnahmevolumen nur teilweise ausgenutzt ist.

Um möglichst auf die Unwirtschaftlichkeit dieses Prozesses positiv Einfluss nehmen zu können, wurde die Lösung nach der WO 2004039698 A1 vorgestellt.

Danach schiebt bei dieser Vorrichtungslösung ein Schieberelement, welches an einer Transporteinrichtung festgelegt und dem oberen Bereich des Sammelbehälters zugeordnet ist, das oberste zumindest nahezu achssymmetrisch ausgebildete Getränkebehältnis des gebildeten Schüttgutkegels zur Seite mit dem Ziel, dieses in einen unteren Bereiche des Sammelbehälters zu verbringen. Da aber immer nur ein Getränkebehältnis bewegt wird, können bereits vorhandene Hohlräume zwischen den Getränkebehältnissen nicht mehr lückenlos aufgefüllt werden. Daraus resultieren wiederum eine nicht optimale Ausnutzung des Aufnahmenvolumens des Sammelbehälters und ein nur sehr begrenzter positiver Einfluss auf eine Effektivitätssteigerung.

Dies kann auch mit der Lösung nach der DE 35 24 780 C2 nicht entscheidend positiv verändert werden, da hier eine Bunkerräumeinrichtung zur gleichmäßigen Verteilung von in einen Bunker eingebrachten Schüttguts bzw. zur Verhinderung der Bildung eines Schüttgutkegels eingesetzt wird. Aus der aufwendigen sowie zweckgebundenen Konzipierung dieser Lösung resultiert, dass sie für Rücknahmeeinrichtungen für Getränkebehältnisse, insbesondere zum Abtragen und Verteilen von Schüttgutkegeln in den Sammelbehältern, absolut ungeeignet ist.

Den dargestellten Nachteilen dieser zuvor genannten Vor- bzw. Einrichtung soll mit der Lösung gemäß der DE 10 2006 007 875 B3 begegnet werden.

Danach wird eine Vorrichtung zum Verteilen von Behältern, Flaschen und/oder Dosen in einem Container vorgestellt, welche einen Motor mit schwenkbarer Achse, die einen bügelförmigen Verteiler trägt, aufweist, wobei der Verteiler in seiner Ruheposition außerhalb des Aufnahmevolumens des Containers gelagert ist und in der Verteilerposition eine Schwenkbewegung durch zumindest einen Teil des Aufnahmevolumens durchführt.

Obwohl tatsächlich die meisten der vorbeschriebenen Mängel durch diese Lösung beseitigt erscheinen, wirken sich die notwendigen Positionsänderungen des rechteckförmig ausgebildeten Verteilers - innerhalb bzw. außerhalb des Aufnahmevolumens und damit innerhalb bzw. außerhalb des Containers - deshalb sehr nachteilig aus, weil Beschädigungen des Systems bei Entnahmen des gefüllten und noch innerhalb des Aufnahmevolumens des Containers angeordneten Verteilers in Kauf genommen werden müssen. Außerdem hat sich gezeigt, dass mit diesem Prinzip nur ein Teil des Schüttgutkegels aus der Mitte des Containers zur Seite verteilbar ist, wodurch unter praktischen Bedingungen der avisierten Zielstellung einer wirkungsvollen Verteilung der dem Aufbewahrungscontainer zugeführten Dosen und Flaschen nur bedingt Rechnung getragen werden kann.

Außerdem haftet dieser gattungsgemäßen Lösung der entscheidende Nachteil an, dass sie nicht geeignet ist zur Anwendung bei kompaktierten Getränkebehältnissen aus Metall, Kunststoff oder bei Kartonverpackungen, da diese bei Kontakten untereinander mittels ihrer relativ scharfen Knickkanten zum Verklemmen oder Verkeilen neigen und mittels des rechteckigen Verteilers zumeist nicht zu trennen sind, was sich zusätzlich negativ hinsichtlich einer wirkungsvollen Verteilung der Getränkebehältnisse im Aufbewahrungscontainer auswirkt und die Lösung auf ein bestimmtes Anwendungskonzept festlegt.

Die DE 10 2009 018 A1 beschreibt einen Abfallverdichter, insbesondere zum Verdichten von Hausmüll und der direkten Befüllung von Müllsäcken.

Die FR 2 725 922 beschreibt ein Verfahren zum Sortieren von Abfällen aus Plastik, Metall oder Glas zum Recyclen.

Die WO 96/28607 offenbart ein Verfahren und eine Vorrichtung zur Behandlung, insbesondere Bleichen von Faserstoff. Der Faserstoff wird dabei zerkleinert bzw. verfeinert.

Die DE 437772 beschreibt eine Vorrichtung zum gleichmäßigen Beschicken von Bunkern mit Mischgut.

Die DE 7023934U1 beschreibt eine Anordnung zur gleichmäßigen Verteilung von Schüttgut, wie zerkleinertes Eis, welches von oben aus einer Öffnung in einen Lagerraum fällt.

Die DE 20 2011 003 999 U1 offenbart eine Befüllvorrichtung für Behälter.

Die US 5,758,699 beschreibt ein Verfahren und Vorrichtung zum gleichmäßigen Verteilen von Feststoffen in fein verteilter Form in einem Behälter.

Die Lösungen weisen allesamt konstruktive Nachteile auf.

Vor diesem Hintergrund liegt der Erfindung die Aufgabe zu Grunde, eine Verteileinrichtung für Rücknahmeeinrichtungen von Getränkebehältnissen zur Verfügung zu stellen, welche die zuvor genannten Nachteile nicht oder nur in einem geringen Maß aufweist und insbesondere mit einfachen technischen Mitteln und auf einfache Weise eine im Dauerbetrieb wesentlich verbesserte Funktionalität sowie einen hohen Wirkungsgrad bei der Auslastung des Aufnahmevolumens des Sammelbehälters ermöglicht, ohne dass die Verteileinrichtung auf ein bestimmtes Anwendungskonzept festgelegt ist.

Die vorliegende Erfindung löst diese Aufgabe, ausgehend von einer Verteileinrichtung für Rücknahmeeinrichtungen von Getränkebehältnissen, gemäß dem Oberbegriff des Anspruchs 1, durch die im kennzeichnenden Teil des Anspruchs 1 angegebenen Merkmale.

Der vorliegenden Erfindung liegt die technische Lehre zu Grunde, dass man mit einer Verteileinrichtung für Rücknahmeeinrichtungen von Getränkebehältnissen in einfacher Weise eine außerordentlich hohe Funktionalität erreicht und einen hohen Wirkungsgrad bei der Auslastung des Aufnahmevolumens des Sammelbehälters ermöglicht, wenn die Verteileinrichtung mindestens ein stab-, flügel- oder quirlartig ausgebildetes Verteilelement aufweist, wobei die Verteilelemente einerseits mit einer zumindest nahezu vertikal und neben dem Auslass der Zuführeinrichtung angeordneten Antriebswelle der Antriebseinheit verbunden und die horizontalen Kreisbahnwirkbereiche der Verteilelemente sowohl dem Auslass der Zuführeinrichtung zugeordnet als auch zwischen diesem Auslass und der Oberkante des Sammelbehälters festgelegt sind.

Es hat sich gezeigt, dass die Maßnahme, die horizontalen Kreisbahnwirkbereiche der Verteilelemente sowohl dem Auslass der Zuführeinrichtung zu zuordnen als auch zwischen diesem Auslass und der Oberkante des Sammelbehälters oder -containers festzulegen, in mehrfacher Hinsicht vorteilhafte Wirkungen zeitigt.

Einerseits wird dadurch mit einfachen technischen Mitteln eine hohe Funktionalität der Verteileinrichtung erreicht, da die zur eigentlichen Verteilung der Getränkebehältnisse bestimmten Verteilelemente in ihrer grundsätzlichen Position und Ausrichtung zum Sammelbehälter unverändert bleiben, was insbesondere die Minimierung der Störanfälligkeit des Systems positiv beeinflusst Damit werden Ausfallzeiten der Rücknahmeeinrichtung und der Reparaturaufwand entscheidend verringert.

Andererseits stören die so angeordneten Verteilelemente weder bei der Zuführung noch bei der Entnahme des Sammelbehälters, da sie oberhalb der Oberkante des Sammelbehälters angeordnet sind, wodurch der Sammelbehälter ohne Behinderungen in die Rücknahmeeinrichtung hineintransportiert und wieder herausgefahren werden kann, ohne dass Positions- bzw. Lageveränderungen der Verteilelemente erforderlich sind.

Besonders vorteilhaft wirkt sich allerdings aus, dass durch diese Anordnung der horizontalen Kreisbahnwirkbereiche der Verteilelemente ein Verteilen auch kompaktierter Getränkebehältnisse aus Metall, Kunststoff oder Kartonverpackungen nach dem Verlassen des Auslasses der Zuführeinrichtung nahezu innerhalb des gesamten Aufnahmevolumens des Sammelbehälters erreicht wird, da jedes Getränkebehältnis grundsätzlich an einen anderen Ort innerhalb des Sammelbehälters transportiert wird, woraus schon eine sehr gute Ausnutzung des Sammelbehälteraufnahmevolumens resultiert.

Dies wird, nach einer bevorzugten Variante der vorliegenden Erfindung, zusätzlich unterstützt, indem sich der kreisförmige Wirkbereich der Verteilelemente sowohl großflächig unterhalb des Auslasses der Zuführeinrichtung als auch über die freie Restfläche des Sammelbehälters erstreckend ausgebildet ist.

Da außerdem die Antriebseinheit - und damit auch die Verteilelemente - mittels der Steuerung ab einem bestimmten und gemeldeten Füllstand des Sammelbehälters zur Änderung der Drehrichtung geeignet ausgebildet ist, werden auch noch die meisten Leerräume innerhalb des Sammelbehälters ausgefüllt.

Im Zusammenhang mit einer möglichst optimalen Verteilung der Getränkebehältnisse innerhalb des Sammelbehälters wirkt sich besonders vorteilhaft aus, zwei Verteilelemente stabförmig sowie geradlinig gestreckt auszubilden und horizontal an der Antriebswelle festzulegen. Möglich wäre es aber auch, mehrere Verteilelemente zu verwenden und/oder diese flügel- oder quirlartig auszubilden, ohne dass auf entscheidende Vorteile verzichtet werden müsste.

Nach einer weiteren bevorzugten Variante der erfindungsgemäßen Verteileinrichtung sollten die freien Enden der stabförmigen Verteilelemente in Richtung des Sammelbehälters geneigt ausgebildet sein, da sich dies bei der Verteilung von Getränkebehältnissen, insbesondere hinsichtlich einer Verminderung von Leerräumen im Sammelbehälter, zusätzlich sehr positiv auswirkt.

Dabei sollte die zuvor erwähnte Antriebseinheit einen elektromotorischen Antrieb aufweisen und einerseits über einen Aufnahmerahmen mit der Rücknahmeeinrichtung verbunden sein. Andererseits tritt sie über ein Getriebe mit der Antriebswelle in Wirkkontakt. Vorteilhaft würde sich hier auswirken, dass die Umfangsgeschwindigkeit der Verteilelemente problemlos dem Material und/oder dem Gewicht der in den Sammelbehälter einzubringenden Getränkebehältnisse dann angepasst werden kann, wenn dies in Hinsicht auf ein maximales Auslasten des Aufnahmevolumens des Sammelbehälters für erforderlich gehalten wird.

Besondere günstige Bedingungen, insbesondere hinsichtlich des Vermeidens von Vibrationen, werden dadurch erzielt, dass die Antriebseinheit über elastische Elemente mit dem Aufnahmerahmen verbunden ist. Es hat sich weiterhin gezeigt, dass es zur Verhinderung des Eintretens von Schäden am elektromotorischen Antrieb und/oder am Getriebe bei nicht gänzlich auszuschließenden Störungen, beispielsweise bei möglichen Blockaden der Verteilelemente, von Vorteil ist, die Antriebswelle über zumindest ein elastisches Element mit der Antriebseinheit zu verbinden, um die kurze Zeitdifferenz zwischen der Registrierung der Blockade und der von der Steuerung initiierten Abschaltung des elektromotorischen Antriebs schadlos zu überdauern.

Besonders günstige Bedingungen bei einer optimalen Ausnutzung des Aufnahmevolumens des Sammelbehälters können auch erreicht werden, wenn, nach einer weiteren Variante der erfindungsgemäßen Verteileinrichtung, mehrere Antriebswellen, welche entsprechende Verteilelemente tragen und mit zugehörigen Antriebseinrichtungen in Wirkverbindung stehen, zur Anwendung kommen. Hier sollte allerdings, insbesondere aus Gründen der Kostenminimierung und der erzielbaren Effekte, eine vernünftige und die Größe des Sammelbehälters berücksichtigende Anzahl von Antriebswellen berücksichtigt werden.

Weitere Ausführungsformen der erfindungsgemäßen Verteileinrichtung ergeben sich aus den beigefügten Unteransprüchen.

Die vorliegende Erfindung betrifft außerdem eine Rücknahmeeinrichtung für Getränkebehältnisse - mit oder ohne einen Kompaktor - mit einer erfindungsgemäßen Verteileinrichtung.

Weitere bevorzugte Ausgestaltungen der Erfindung ergeben sich aus der nachstehenden Beschreibung eines bevorzugten Ausführungsbeispiels, welches auf die beigefügten Zeichnungen Bezug nimmt.

Die wesentlichen Vorteile der erfindungsgemäßen Verteileinrichtung für Rücknahmeeinrichtungen von Getränkebehältnissen bestehen insbesondere darin, dass sie bei einer signifikant hohen Funktionalität sowie geringen Störanfälligkeit eine hohe Auslastung des Aufnahmevolumens der Sammelbehälter ermöglicht und nicht an ein bestimmtes Anwendungskonzept gebunden ist.

Ein vorteilhaftes Ausführungsbeispiel der Erfindung ist nachstehend anhand der Zeichnungen veranschaulicht.

Es zeigen
- Fig. 1 -: eine schematische Darstellung einer bevorzugten Ausführungsform der erfindungsgemäßen Verteileinrichtung in Seitenansicht
- Fig. 2 -: Ansicht nach Fig. 1 in Draufsicht

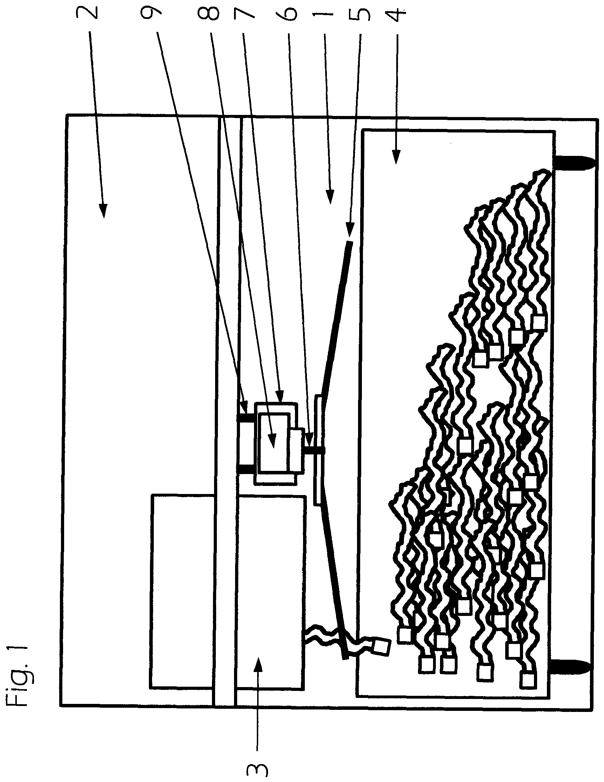

Fig. 1 zeigt eine schematische Darstellung einer bevorzugten Ausführungsform der erfindungsgemäßen Verteileinrichtung 1 in Seitenansicht, in welcher deutlich zu erkennen ist, dass von der Rücknahmeeinrichtung 2 aufgenommene und kompaktierte Getränkebehältnisse aus Kunststoff, wie Getränkeflaschen, über den Auslass 3 der Zuführeinrichtung dem Sammelbehälter 4 zugeführt werden.

Im vorliegenden Fall sind die einerseits mit der Antriebswelle 6 verbundenen Verteilelemente 5 stabförmig ausgebildet, während deren freie Enden zum Sammelbehälter 4 geneigt angeordnet sind. Daraus resultiert der Vorteil, dass ein gegebenenfalls entstandener Schüttgutkegel relativ leicht und problemlos zu beseitigen ist und die diesen Kegel bildenden Getränkebehältnisse nahezu lückenlos zu jedem Ort innerhalb des Sammelbehälters 4 transportiert werden können.

Insbesondere um einen ungehinderten Transport des Sammelbehälters 4 in die bzw. aus der Zuführeinrichtung zu ermöglichen, sind die horizontalen Kreisbahnwirkbereiche der Verteilelemente 5 sowohl dem Auslass 3 der Zuführeinrichtung zugeordnet als auch zwischen diesem Auslass 3 und der Oberkante des Sammelbehälters 4 festgelegt. Dabei sollte die Antriebswelle 6 der nicht näher dargestellten Antriebseinheit 7 zumindest nahezu vertikal und neben dem zuvor beschriebenen Auslass 3 angeordnet werden.

Deutlich ist in der Zeichnung dargestellt, dass sich der kreisförmige Wirkbereich der Verteilelemente 5 sowohl großflächig unterhalb des Auslasses 3 der Zuführeinrichtung als auch über einen großen Teil der freien Restfläche des Sammelbehälters 4 erstreckend ausgebildet ist. Daraus resultiert, dass das den Auslass 3 verlassende kompaktierte Getränkebehältnis nahezu jedem Ort innerhalb des Sammelbehälters 4 zugeführt und das Entstehen ungewollter Schüttgutkegel mit großer Sicherheit ausgeschlossen werden kann.

Wie bereits ausgeführt, ist die Antriebeinheit 7 nicht näher gezeigt. Sie weist aber einen elektromotorischen Antrieb 8 auf und ist einerseits über elastische Elemente 9 an einem Aufnahmerahmen 10, welcher mit der Rücknahmeeinrichtung 2 verbunden ist, festgelegt und steht andererseits mit der Antriebswelle 6 - vorteilhafter Weise über ein Getriebe - in Wirkverbindung. Dabei sollte, um im Störungsfall keine negativen Auswirkungen in Kauf nehmen zu müssen, die Antriebswelle 6 ebenfalls über zumindest ein elastisches Element mit der Antriebseinheit 7 verbunden ausgebildet sein, was aber zeichnerisch nicht dargestellt wurde.

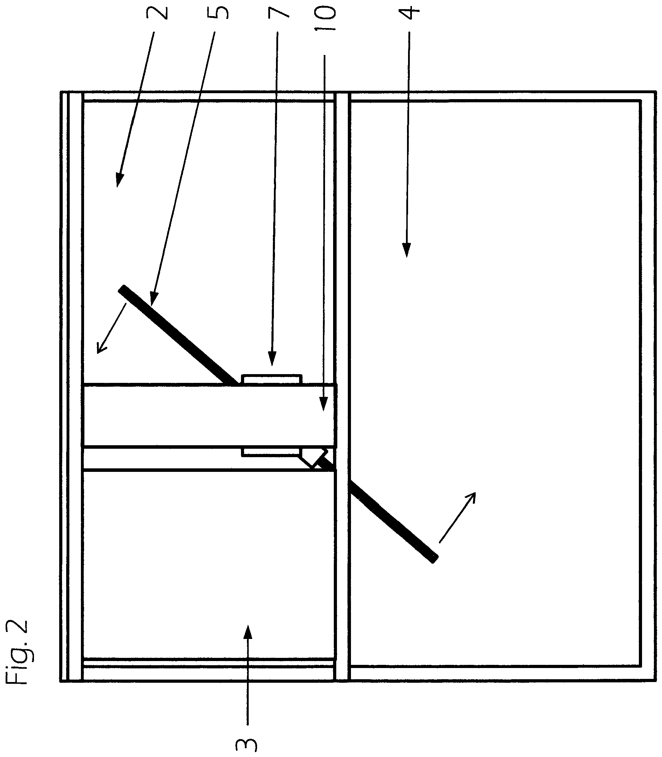

Insbesondere die Darstellung in Fig. 2 lässt erahnen, dass auch mehrere mit Verteilelementen 5 ausgestattete und mit entsprechenden Antriebseinheiten 7 in Wirkverbindung stehende Antriebswellen 6 oberhalb der offenen Fläche des Sammelbehälters 4 zur Anwendung kommen könnten, was aber nur unter bestimmten praktischen Bedingungen eine entscheidende Rolle spielen dürfte.

Im konkreten Fall ist aber zu erkennen, dass der kreisförmige Wirkbereich der beiden Verteilelemente 5 sich über einen Großteil der oben offenen Einfüllöffnung des Sammelbehälters 4 erstreckend angeordnet ist, wodurch ein nahezu sicheres Verbringen der Getränkebehältnisse an fast alle Orte innerhalb des Sammelbehälters 4 und ein gewünschtes Auslasten des Aufnahmevolumens erreichbar ist.

Im Folgenden soll die erfindungsgemäße Verteileinrichtung 1 kurz in Funktion beschrieben werden, wobei davon ausgegangen wird, dass kompaktierte Kunststoffgetränkeflaschen dem Sammelbehälter 4 zugeführt werden sollen.

Nachdem dieses Getränkebehältnis den Kompaktierer der Rücknahmeeinrichtung 2 verlassen und den Auslass 3 der Zuführeinrichtung passiert hat, wird es vom Sammelbehälter 4 aufgenommen. Dabei transportieren sich die Getränkebehältnisse selbst - bzw. werden von anderen geschoben - bis zu einem gewissen Füllstand des Sammelbehälters 4 in die freien Positionen innerhalb des Sammelbehälters 4.

Ab einer gewissen Auslastung des Aufnahmevolumens des Sammelbehälters 4 baut sich unterhalb des Auslasses 3 der Zuführeinrichtung ein Schüttgutkegel auf, der eigentlich deshalb unerwünscht ist, weil dadurch die optimale Auslastung des Aufnahmevolumens verhindert und viel zu früh eine Vollmeldung des Sammelbehälters signalisiert wird.

Das Erreichen einer bestimmten Höhe des Schüttgutkegels wird beispielsweise sensorisch oder durch Zählung der angenommenen Getränkebehältnisse erfasst und der elektromotorische Antrieb 8 der Antriebseinheit 7 wird angesteuert, wodurch die Antriebswelle 6 sich in Bewegung setzt und die Verteilelemente 5 ihren kreisförmigen Wirkbereich bearbeiten. Dies bedeutet, dass eine große Anzahl der den Schüttgutkegel bildenden Getränkebehältnisse aus diesem Kegel herausgeschleudert werden und noch freie Stellen innerhalb des Sammelbehälters belegen.

Ist der Schüttgutkegel bereits zu hoch oder wird ein bestimmter Füllstand signalisiert, können Änderungen der Drehrichtungen der Antriebseinheit 7 veranlasst werden, was zu Rütteleffekten der Verteilelemente 5 innerhalb des Schüttgutkegels führt. Diese Rütteleffekte werden über die direkt mit den Verteilelementen 5 in Wirkkontakt tretenden Getränkebehältnisse auf nahezu alle vom Sammelbehälter 4 bereits aufgenommenen Getränkebehältnisse übertragen, was zu einer Abstandsverringerung der abgelegten Getränkebehältnisse und damit zu einer besseren Auslastung des Aufnahmevolumens des Sammelbehälters 4 führt.

Möglich ist es natürlich auch, die Verteilelemente 5 bereits dann einzusetzen, wenn das Befüllen des Sammelbehälters 4 beginnt oder bereits seit kurzer Zeit erfolgt. In diesem Fall werden die den Auslass 3 der Zuführeinrichtung verlassenden Getränkebehältnisse durch ihren erzwungenen Kontakt mit den Verteilelementen 5 zumeist innerhalb des gesamten Sammelbehälters 4 derart verteilt, dass das Entstehen eines Schuttgutkegels kaum möglich ist. Auch in diesem Fall wird die Auslastung des Aufnahmevolumens des Sammelbehälters 4 entscheidend verbessert.

Es versteht sich in diesem Zusammenhang, dass nicht alle möglichen Einsatzvarianten der erfindungsgemäßen Verteileinrichtung 1 beschrieben werden können, und dass der grundsätzliche Erfindungsgedanke nicht an die in diesem Ausführungsbeispiel dargestellten Einzelheiten gebunden ist.

## Patentansprüche

1. Verteileinrichtung für Rücknahmeeinrichtungen von Getränkebehältnissen, mindestens aufweisend eine Zuführeinrichtung mit einem Auslass, einen dem Auslass der Zuführeinrichtung zugeordneten fahrbaren Sammelbehälter, eine Antriebseinheit und eine übergeordnete Steuerung,
wobei die Verteileinrichtung (1) mindestens ein stab-, flügel- oder quirlartig ausgebildetes Verteilelement (5) aufweist, wobei
die Verteilelemente (5) einerseits mit einer zumindest nahezu vertikal und neben dem Auslass (3) der Zuführeinrichtung angeordneten Antriebswelle (6) der Antriebseinheit (7) verbunden und
die horizontalen Kreisbahnwirkbereiche der Verteilelemente (5) sowohl dem Auslass (3) der Zuführeinrichtung zugeordnet als auch zwischen dem Auslass (3) und der Oberkante des Sammelbehälters (4) festgelegt sind und dass die Verteilelemente (5) geradlinig gestreckt ausgebildet und horizontal angeordnet sind **dadurch gekennzeichnet,**
**dass** die Antriebseinheit (7) einen elektromotorischen Antrieb (8) aufweist und einerseits über elastische Elemente (9) und einen Aufnahmerahmen (10) mit der Rücknahmeeinrichtung (2) verbunden ist und andererseits über ein Getriebe mit der Antriebswelle (6) in Wirkverbindung steht
und **dass** die Antriebswelle (6) über zumindest ein elastisches Element mit der Antriebseinheit (7) verbunden ausgebildet ist
und **dass** die Antriebseinheit (7) mittels der Steuerung einen Überlastschutz aufweist und eine Änderung der Drehrichtung veranlasst, entweder bei Blockaden des mindestens einen Verteilelementes (5) durch einen im Sammelbehälter (4) aus den Getränkebehältnissen entstandenen Schüttgutkegel oder
ab einem bestimmten und gemeldeten Füllstand des Sammelbehälters (4) wobei der Füllstand darauf schließen lässt, dass die Höhe des Schüttgutkegels so hoch ist, dass sich das mindestens eine Verteilelement (5) innerhalb des Schüttgutkegels befindet.

2. Verteileinrichtung nach Anspruch 1, **dadurch gekennzeichnet, dass** die freien Enden des mindestens einen Verteilelementes (5) in Richtung des Sammelbehälters (4) geneigt ausgebildet sind.

3. Verteileinrichtung nach einem der vorangegangenen Ansprüche, **dadurch gekennzeichnet, dass** sich der kreisförmige Wirkbereich des mindestens einen Verteilelementes (5) sowohl großflächig unterhalb des Auslasses (3) der Zuführeinrichtung als auch über die freie Restfläche des Sammelbehälters (4) erstreckend ausgebildet ist.

4. Verteileinrichtung nach einem der vorangegangenen Ansprüche, **dadurch gekennzeichnet, dass** die Antriebswelle (6) der Antriebseinheit (7) zwei stab-, flügel- oder quirlartig ausgebildete Verteilelemente (5) trägt.

5. Verteileinrichtung nach einem der vorangegangenen Ansprüche, **dadurch gekennzeichnet, dass** sie mehrere Verteilelemente (5) tragende und mit Antriebseinheiten (7) in Wirkverbindung stehende Antriebswellen (6) aufweist.

6. Rücknahmeeinrichtung (2) mit einer Verteileinrichtung (1) nach einem der vorangegangenen Ansprüche.

## Claims

1. A distribution device for reverse vending system for beverage containers, at least comprising a feed device including a discharge opening, a movable collection bin assigned to the discharge opening of the feed device, a drive unit, and a higher-level control unit,
the distribution device (1) comprising at least one rod-, wing- or agitator-like distribution element (5),
the distribution elements (5) being connected to a drive shaft (6) of the drive unit (7) which is arranged at least almost vertically and next to the discharge opening (3) of the feed device, and
the horizontal circular-path effective ranges of the distribution elements (5) being both assigned to the discharge opening (3) of the feed device and fixed between the discharge opening (3) and the upper edge of the collection bin (4), and
the distribution elements (5) being designed to be stretched in a rectilinear manner and horizontally arranged, **characterized in that**
the drive unit (7) comprises an electric motor drive (8) and, on the one hand, is connected to the reverse vending system (2) by way of elastic elements (9) and a receiving frame (10) and, on the other hand, is operatively connected by way of a gearbox to the drive shaft (6), and
the drive shaft (6) is designed to be connected to the drive unit (7) by way of at least one elastic element, and
the drive unit (7) includes an overload protection system by way of the control unit and prompts a change in the direction of rotation, either when the at least one distribution element (5) is blocked by a loose materials heap that has accumulated in the collection bin (4) from the beverage containers, or
starting at a particular and reported fill level of the collection bin (4), the fill level allowing a conclusion that the level of the loose materials heap is so high that the at least one distribution element (5) is located inside the loose materials heap.

2. The distribution device according to claim 1, **characterized in that** the free ends of the at least one distribution element (5) are designed to be inclined in the direction of the collection bin (4).

3. A distribution device according to any one of the preceding claims, **characterized in that** the circular effective range of the at least one distribution element (5) is designed to extend both across a large area beneath the discharge opening (3) of the feed device and across the free remaining area of the collection bin (4).

4. A distribution device according to any one of the preceding claims, **characterized in that** the drive shaft (6) of the drive unit (7) carries two rod-, wing- or agitator-like distribution elements (5).

5. A distribution device according to any one of the preceding claims, **characterized by** comprising a plurality of drive shafts (6) that carry distribution elements (5) and are operatively connected to drive units (7).

6. A reverse vending system (2), comprising a distribution device (1) according to any one of the preceding claims.

## Revendications

1. Dispositif de distribution pour des dispositifs de reprise de récipients de boissons, présentant au moins un dispositif d'introduction doté d'une sortie, un récipient de collecte mobile associé à la sortie du dispositif d'introduction, une unité d'entraînement et un système de commande principal,
où le dispositif de distribution (1) présente un élément de distribution (5) conçu sous forme d'une perche, d'une aile ou d'un genre de fouet, où
les éléments de distribution (5) sont reliés d'une part, avec un arbre d'entraînement (6) de l'unité d'entraînement (7) disposé pratiquement à la verticale et à côté de la sortie (3) du dispositif d'introduction, et
les zones efficaces de la zone circulaire horizontales des éléments de distribution (5) sont associées à la fois à la sortie (3) du dispositif d'introduction et sont fixées entre la sortie (3) et le bord supérieur du récipient de collecte (4) et que les éléments de distribution (5) sont conçus étirés en ligne droite et sont disposés horizontalement, **caractérisé en ce**
**que** l'unité d'entraînement (7) présente un entraînement électro-motorisé (8) et est relié d'une part avec le dispositif de reprise (2) par le biais d'éléments élastiques (9) et d'un châssis de réception (10) et d'autre part est en liaison opérationnelle avec l'arbre d'entraînement (6) par le biais d'un système de transmission
et **que** l'arbre d'entraînement (6) est conçu relié avec l'unité d'entraînement (7) par le biais d'au moins un élément élastique
et **que** l'unité d'entrainement (7) présente une protection contre les surcharges au moyen du système de commande et engendre une modification du sens de rotation, soit par des blocages de l'au moins un élément de distribution (5) par un cône de déversement de produit en vrac créé dans le récipient de collecte (4) à partir des récipients de boisson, soit
à partir d'un niveau de remplissage déterminé et consigné du récipient de collecte (4), où le niveau de remplissage permet de conclure que la hauteur du cône de déversement de produit en vrac est suffisamment importante pour qu'au moins un élément de distribution (5) se trouve à l'intérieur du cône de déversement de produit en vrac.

2. Dispositif de distribution selon la revendication 1, **caractérisé en ce que** les extrémités libres de l'au moins un élément de distribution (5) sont conçus inclinés en direction du récipient de collecte (4).

3. Dispositif de distribution selon l'une des revendications précédentes, **caractérisé en ce que** la zone efficace de forme circulaire de l'au moins un élément de distribution (5) est conçue en s'étirant à la fois avec une surface élevée en dessous de la sortie (4) du dispositif d'introduction et au-dessus de la surface restante libre du récipient de collecte (4).

4. Dispositif de distribution selon l'une des revendications précédentes, **caractérisé en ce que** l'arbre d'entraînement (6) de l'unité d'entraînement (7) porte deux éléments de distribution (5) en forme de perche, d'aile ou d'un genre de fouet.

5. Dispositif de distribution selon l'une des revendications précédentes, **caractérisé en ce qu'**il présente des arbres d'entraînement (6) portant plusieurs éléments de distribution (5) et étant en liaison opérationnelle avec des unités d'entraînement (7).

6. Dispositif de reprise (2) doté d'un dispositif de distribution (1) selon l'une des revendications précédentes.
